(19) Europäisches Patentamt
European Patent Office
Office européen des brevets

(11) EP 1 261 559 B1

(12) **EUROPÄISCHE PATENTSCHRIFT**

(45) Veröffentlichungstag und Bekanntmachung des Hinweises auf die Patenterteilung:
**16.06.2004 Patentblatt 2004/25**

(21) Anmeldenummer: **01919268.1**

(22) Anmeldetag: **08.02.2001**

(51) Int Cl.⁷: **C03C 17/42**, B32B 17/10

(86) Internationale Anmeldenummer:
**PCT/EP2001/001339**

(87) Internationale Veröffentlichungsnummer:
**WO 2001/062682 (30.08.2001 Gazette 2001/35)**

(54) **LANGZEITSTABILE WASSER- UND ÖLABWEISENDE OBERFLÄCHE UND VERFAHREN ZUR HERSTELLUNG DERSELBEN**

LONG-TIME STABLE WATER-REPELLENT AND OIL-REPELLENT SURFACE AND A METHOD FOR PRODUCING THE SAME

SURFACE HYDROPHOBE ET OLEOPHOBE STABLE A LONG TERME ET PROCEDE POUR FABRIQUER LAMEME

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.02.2000 DE 10007859**

(43) Veröffentlichungstag der Anmeldung:
**04.12.2002 Patentblatt 2002/49**

(73) Patentinhaber: **Sunyx Surface Nanotechnologies GmbH**
**50933 Köln (DE)**

(72) Erfinder: **REIHS, Karsten**
**50968 Köln (DE)**

(74) Vertreter: **Wolff, Felix, Dr. et al**
**Kutzenberger & Wolff**
**Theodor-Heuss-Ring 23**
**50668 Köln (DE)**

(56) Entgegenhaltungen:
**EP-A- 0 272 918**
**EP-A- 0 273 427**
**EP-A- 0 961 157**
**WO-A-99/33760**
**DE-A- 4 201 914**
**US-A- 4 202 926**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine langzeitstabile hydro- und/oder oleophobe Oberfläche und ihre Verwendung.

Ein hydrophobes Material im Sinne der Erfindung ist ein Material, das auf einer ebenen nicht strukturierten Oberfläche einen Randwinkel bezogen auf Wasser von größer als 90° zeigt.

Ein oleophobes Material im Sinne der Erfindung ist ein Material, das auf einer ebenen nicht strukturierten Oberfläche einen Randwinkel bezogen auf langkettige n-Alkane, wie n-Dekan von größer als 90° zeigt.

Derartige Oberflächen können z.B. für Scheiben in Automobilen eingesetzt werden, wenn sie gleichzeitig transparent sind. Die wasserabweisende Eigenschaft führt bei Regen zur Bildung von Tropfen, die durch den Fahrtwind entfernt werden können, wodurch die Sicht bei Regen stark verbessert wird..

Es hat deshalb nicht an Versuchen gefehlt, solche hydrophoben und oleophoben Oberflächen zur Verfügung zu stellen. So wird in der Veröffentlichung von A. Hozumi, H. Sekoguchi, N. Kakinoki und O. Takai in Journal of Materials Science 32, 4253-4259 (1997) ein Verfahren beschrieben, mit dem transparente Substrate mit einem dünnen transparenten hydrophoben Film beschichtet werden. Der Film wird durch radiofrequenz-unterstützte CVD (chemical vapour deposition) von Perfluoralkylverbindungen hergestellt und führt zu einem Wasserrandwinkel von 107°.

Weiterhin wird in der Patentschrift US 5 688 864 (Patentinhaber: PPG Industries) gelehrt, wie Glasoberflächen mit Hilfe von Perfluoralkylsilanen hydrophobisiert werden können. Hierzu wird die Verbindung in einem Lösungsmittel auf die Glasoberfläche aufgebracht, wodurch es zur Reaktion des Silans mit der Oberfläche kommt. Die Oberfläche besitzt nach der Behandlung einen Wasserrandwinkel von 115°.

Die mit diesen Verfahren hergestellten Oberflächen haben jedoch den Nachteil, daß der Kontaktwinkel eines Tropfens, der auf der Oberfläche liegt, mit der Zeit stark abnimmt. Es sind daher vielfach Anstrengungen unternommen worden, um die Dauerhaftigkeit der hydrophoben Beschichtung zu verlängern. So wird in der Patentschrift US 5 980 990 gelehrt, dass eine Vorbehandlung der Glasoberfläche mit Säure und eine anschließende Reaktion mit einem hydrophoben Silan zu einer deutlich verbesserten Langzeitstabilität führt.

Die Haltbarkeit dieser Filme ist jedoch im Normalgebrauch auf einige Monate beschränkt. Die Firma PPG Industries empfiehlt beispielsweise in ihren Anwendungshinweisen für ihr als sehr haltbar bezeichnetes Produkt Aquapel®, die Beschichtung bei Normalgebrauch nach einigen Monaten zu erneuern.

Es stellt sich deshalb die Aufgabe, hydrophobe und/oder oleophobe Oberflächen und Verfahren zu ihrer Herstellung zur Verfügung zu stellen, die einen Kontaktwinkel >90° aufweisen, der auch bei starker Beanspruchung über viele Jahre stabil ist.

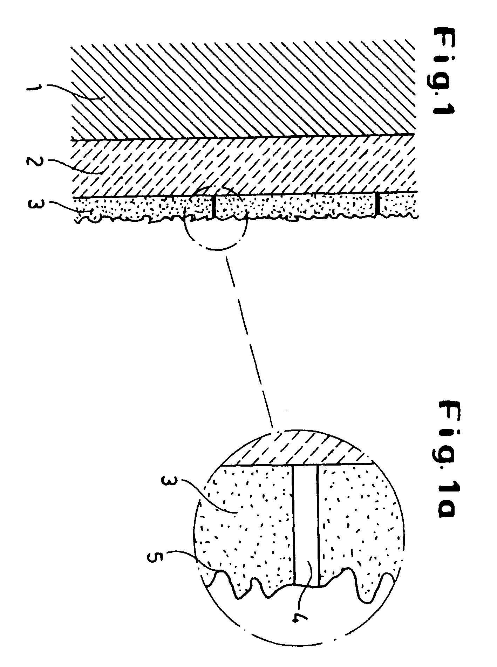

Die Aufgabe wird erfindungsgemäß durch die Herstellung einer Oberfläche gelöst, die beispielhaft in der Figur 1 beschrieben ist. Auf einem Träger (z.B. Glas oder ein Polymer, wie z.B. Polycarbonat) befindet sich eine Reservoirschicht, in der ein Phobierungsmittel gelöst und frei beweglich ist, welches hydrophob und/oder oleophob ist. Eine weitere Schicht (Abdeckschicht) deckt die Reservoirschicht nach außen ab. Durch Poren in der Abdeckschicht diffundiert das in der Reservoirschicht befindliche Phobierungsmittel an die Außenoberfläche und bildet dort eine Außenschicht. Die Oberfläche dieser Schicht weist gegenüber Wasser einen Randwinkel > 90° auf.

Gegenstand der Erfindung ist eine langzeitstabile hydrophobe oder oleophobe Oberfläche aufgebaut wenigstens aus einem Substrat mit einer darauf angeordneten, ein Phobierungsmittel enthaltenden Reservoirschicht, einer darüber angeordneten mit Poren versehenen oder für das Phobierungsmittel durchlässigen Abdeckschicht und einer Außenschicht, die durch das Phobierungsmittel gebildet wird.

Bei Oberflächen nach dem Stand der Technik wird die hydrophobe Schicht langsam z.B. durch Bewitterung abgebaut. Die Lebensdauer ist dadurch stark begrenzt. Bei der vorliegenden Erfindung wurde jedoch überraschend festgestellt, dass durch die Poren ständig neues Phobierungsmittel für die Außenschicht nachgeliefert wird, wodurch der Abbau immer genau kompensiert wird, solange noch Material in der Reservoirschicht vorhanden ist. Durch die Nachlieferung des Phobierungsmittels bleibt auch der Randwinkel stabil.

Besonders bevorzugt weist die Oberfläche der Abdeckschicht eine Oberflächentopographie auf, wie sie in der internationalen Patentanmeldung mit dem Aktenzeichen PCT/99/10322 beschrieben ist. Die Oberflächentopographie ist dabei so aufgebaut, dass der Wert des Integrals einer Funktion S

$$S(\log f) = a(f) \cdot f ,$$

die einen Zusammenhang zwischen den Ortsfrequenzen f der einzelnen Fourierkomponenten und deren Amplituden a(f) gibt, zwischen den Integrationsgrenzen $\log (f_1 / \mu m^{-1}) = -3$ und $\log (f_2 / \mu m^{-1}) = 3$, mindestens 0,3 beträgt.

In diesem Fall ist der Randwinkel gegenüber Wasser deutlich höher, als der einer unstrukturierten ebenen Oberfläche.

Die Reservoirschicht hat bevorzugt eine Dicke im Bereich 0,1µm bis 10000µm, besonders bevorzugt im Be-

reich 1μm bis 2000μm, ganz besonders bevorzugt im Bereich 10μm bis 1000μm und insbesondere bevorzugt im Bereich 50μm bis 500μm.

Die Abdeckschicht hat vorzugsweise eine Dicke im Bereich 0,01μm bis 100μm, bevorzugt im Bereich 0,02μm bis 50μm, besonders bevorzugt im Bereich 0,05μm bis 20μm und ganz besonders bevorzugt im Bereich 0,1μm bis 10μm.

Die Poren 4 können im Querschnitt entlang ihrer Längsachse eine zylindrische oder konische Form, oder jede andere beliebige Form aufweisen. Der Öffnungsquerschnitt der Poren beträgt an der Grenzfläche zur Reservoirschicht und unabhängig hiervon gleich oder verschieden an der Grenzfläche zur Außenschicht von $10^{-5}$ $\mu m^2$ bis $10^6$ $\mu m^2$, bevorzugt von $4 \times 10^{-4}$ $\mu m^2$ bis $4 \times 10^4$ $\mu m^2$, besonders bevorzugt von $1 \times 10^{-2}$ $\mu m^2$ bis $1 \times 10^4$ $nm^2$ und ganz besonders von 2x $10^{-1}$ $\mu m^2$ bis $2 \times 10^3$ $\mu m^2$.

Die Anzahl der Poren pro Fläche beträgt insbesondere von 2 $mm^{-2}$ bis $10^{-4}$ $mm^{-2}$, bevorzugt von 1 $mm^{-2}$ bis $10^{-3}$ $mm^{-2}$, besonders bevorzugt von 0,5 $mm^{-2}$ bis $10^{-2}$ $mm^{-2}$.

Die Poren werden vorzugsweise durch Ablation mit Lasern, besonders bevorzugt durch Ultraviolett-Laser, ganz besonders bevorzugt durch Ultraviolett-Laser der Wellenlängen 308 nm, 266 nm, 248 nm, 213 nm, 193 nm oder 157 nm hergestellt.

In einer weiteren bevorzugten Weise werden die Poren 4 lithographisch über Masken mit chemischen Ätzverfahren hergestellt.

Das Substrat besteht aus einem beliebigen Material, das hydrophob und/oder oleophob beschichtet werden kann. Bevorzugt besteht das Substrat aus einem transparenten Material, insbesondere transparentem Glas, Kunststoff oder Keramik.

Die Reservoirschicht ist insbesondere eine offen-poröse Schicht aus Metall oder eine offen-porösen Schicht eines keramischen Materials oder besteht aus einem duroplastischen oder thermoplastischen Kunststoff. Bevorzugt besteht die Reservoirschicht aus einem transparenten Material, insbesondere transparentem Glas, Kunststoff oder Keramik.

Besonders bevorzugt ist das Metall für die Reservoirschicht und/oder das Substrat aus der Reihe Beryllium, Magnesium, Scandium, Titan, Vanadium, Chrom, Mangan, Eisen, Kobalt, Nickel, Kupfer, Zink, Gallium, Yttrium, Zirkon, Niob, Molybdän, Tcchnetium, Ruthenium, Rhenium, Palladium, Silber, Cadmium, Indium, Zinn, Lanthan, Cer, Praseodym, Neodym, Samarium, Europium, Gadolinium, Terbium, Dysprosium, Holmium, Erbium, Thulium, Ytterbium, Lutetium, Hafnium, Tantal, Wolfram, Rhenium, Osmium, Iridium, Platin, Gold, Thallium, Blei, Wismut, insbesondere Titan, Aluminium, Magnesium, Nickel oder einer möglichen Legierung der genannten Metalle ausgewählt.

Als keramische Materialien für die Reservoirschicht und/oder das Substrat eignen sich insbesondere Metalloxide, Metallcarbide, Metallnitride, Metallsulfide, Metallfluoride der oben genannten Metalle sowie Verbunde dieser Materialien.

Der bevorzugte duroplastische Kunststoff ist insbesondere aus der Reihe: Diallylphthalat-Harz, Epoxid-Harz, Harnstoff-Formaldehyd-Harz, Melamin-Formaldehyd-Harz, Melamin-Phenol-Formaldehyd-Harz, Phenol-Formaldehyd-Harz, Polyimid, Silikonkautschuk und ungesättigtes Polyesterharz ausgewählt.

Der bevorzugte thermoplastische Kunststoff ist insbesondere aus der Reihe: thermoplastisches Polyolefin, z. B. Polypropylen oder Polyethylen, Polycarbonat, Polyestercarbonat, Polyester (z.B. PBT oder PET), Polystyrol, Styrolcopolymerisat, SAN-Harz, kautschukhaltiges Styrol-Pfropf-Copolymerisat, z.B. ABS-Polymerisat, Polyamid, Polyurethan, Polyphenylensulfid, Polyvinylchlorid oder beliebigen möglichen Mischungen der genannten Polymere ausgewählt.

Insbesondere eignen sich folgende thermoplastischen Polymere als Substrat für die erfindungsgemäße Oberfläche:

> Polyolefine wie Polyethylen hoher und niedriger Dichte, d. h. Dichten von 0,91 $g/cm^3$ bis 0,97 $g/cm^3$, die nach bekannten Verfahren, Ullmann (4.) 19, Seite 167 ff, Winnacker-Kückler (4.) 6, 353 bis 367, Elias u. Vohwinkel, Neue Polymere Werkstoffe für die industrielle Anwendung, München, Hanser 1983, hergestellt werden können.

Weiterhin eignen sich Polypropylene mit Molekulargewichten von 10.000 g/mol bis 1.000.000 g/mol, die nach bekannten Verfahren, Ullmann (5.) A10, Seite 615 ff., Houben-Weyl E20/2, Seite 722 ff., Ullmann (4.) 19, Seite 195 ff., Kirk-Othmer (3.) 16, Seite 357 ff., hergestellt werden können.

Es sind aber auch Copolymerisate der genannten Olefine oder mit weiteren $\alpha$-Olefinen möglich, wie beispielsweise Polymere aus Ethylen mit Buten, Hexen und/oder Octen, EVA (Ethylenvinylacetatcopolymerisate), EBA (Ethylenethylacrylatcopolymerisate), EEA (Ethylenbutylacrylatcopolymerisate), EAS (Acrylsäureethylencopolymerisate), EVK (Ethylenvinylcarbazolcopolymerisate), EPB (Ethylen-Propylen-Blockcopolymere), EPDM (Ethylen-Propylen-Dien-Copolymerisate), PB (Polybutylen), PMP (Polymethylpentene), PIB (Polyisobutylene), NBR (Acrylnitrilbutadiencopolymerisate), Polyisoprene, Methyl-butylencopolymerisate, Isoprenisobutylencopolymerisate.

Herstellungsverfahren: solche Polymerisate sind z. B. in Kunststoff-Handbuch, Band IV, München, Hanser

Verlag, Ullmann (4.) 19, Seite 167 ff, Winnacker-Kückler (4.) 6, 353 bis 367, Elias u. Vohwinkel, Neue Polymere Werkstoffe, München, Hanser 1983, Franck u. Biederbick, Kunststoff Kompendium Würzburg, Vogel 1984, offenbart.

Erfindungsgemäß geeignete thermoplastische Kunststoffe sind auch thermoplastische, aromatische Polycarbonate insbesondere solche auf Basis der Diphenole der Formel (I)

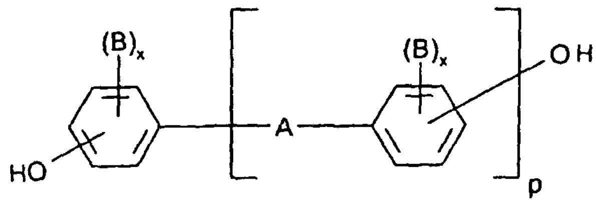

(I)

worin

A eine Einfachbindung, $C_1$-$C_5$-Alkylen, $C_2$-$C_5$-Alkyliden, $C_5$-$C_6$-Cycloalkyliden, -S-, $-SO_2-$, -O-, -CO-, oder ein $C_6$-$C_{12}$-Arylen-Rest, der gegebenenfalls mit weiteren, Heteroatome enthaltenden aromatischen Ringen kondensiert sein kann,
die Reste B, unabhängig voneinander, jeweils ein $C_1$-$C_8$-Alkyl, $C_6$-$C_{10}$-Aryl, besonders bevorzugt Phenyl, $C_7$-$C_{12}$-Aralkyl, bevorzugt Benzyl, Halogen, bevorzugt Chlor, Brom,

x unabhängig voneinander, jeweils 0, 1 oder 2 und

p 1 oder 0 bedeuten,

oder alkylsubstituierte Dihydroxyphenylcycloalkane der Formel (II),

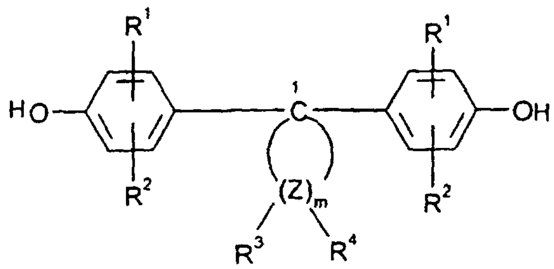

(II)

worin

$R^1$ und $R^2$, unabhängig voneinander, jeweils Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes Z individuell wählbar, unabhängig voneinander, Wasserstoff oder $C_1$-$C_6$-Alkyl, vorzugsweise Wasserstoff, Methyl oder Ethyl,

und

Z Kohlenstoff bedeutet, mit der Maßgabe, daß an mindestens einem Atom Z $R^3$ und $R^4$ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (1) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind Dihydroxydiphenylcycloalkane mit 5 und 6 Ring-C-Atomen im cycloaliphatischen Rest [(m = 4 oder 5 in Formel (II)] wie beispielsweise die Diphenole der Formeln

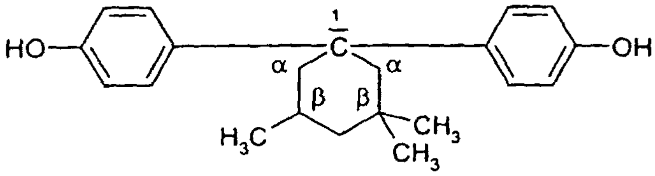
(IIa)

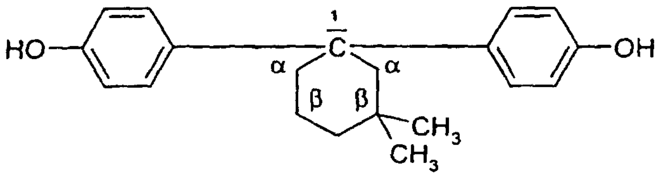
(IIb)

und

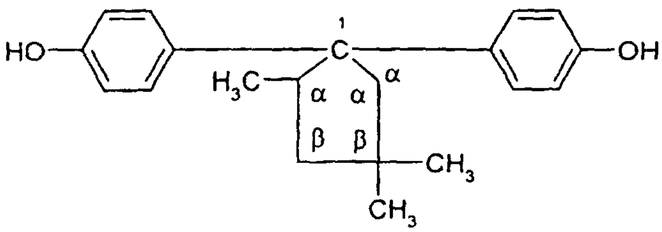
(IIc),

wobei das 1,1-Bis-(4-hydroxyphenyl)-3,3,5-trimethylcyclohexyn (Formel IIc) besonders bevorzugt ist.

Die erfindungsgemäß geeigneten Polycarbonate können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, z.B. solchen mit drei oder mehr als drei phenolischen Gruppen, beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl)-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Trimellitsäure, Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 mol-%, bezogen auf die mol-Summen an Diphenolen, an 2,2-Bis-(3,5-dibrom-4-hydroxyphenyl)-propan.

Die zum Einsatz kommenden aromatischen Polycarbonate können teilweise durch aromatische Polyestercarbonate ausgetauscht werden.

Aromatische Polycarbonate und/oder aromatische Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2703376, DE-OS 2714544, DE-OS 3000610, DE-OS 3 832 396; zur Herstellung aromatischer Polyestercarbonate z.B. DE-OS 3 077 934).

Die Herstellung aromatischer Polycarbonate und/oder aromatischer Polyestercarbonate kann z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung der Kettenabbrecher und gegebenenfalls unter Verwendung der trifunktionellen oder mehr als trifunktionellen Verzweiger erfolgen.

Weiterhin sind als thermoplastische Kunststoffe Styrol-Copolymerisate von einem oder wenigstens zwei ethylenisch ungesättigten Monomeren (Vinylmonomeren) geeignet, wie beispielsweise von Styrol, α-Methylstyrol, kernsubstituierten Styrolen, Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

Die Copolymerisate sind harzartig, thermoplastisch und kautschukfrei.

Bevorzugte Styrol-Copolymerisate sind solche aus wenigstens einem Monomeren aus der Reihe Styrol, α-Methylstyrol und/oder kernsubstituiertem Styrol mit wenigstens einem Monomeren aus der Reihe Acrylnitril, Methacrylnitril, Methylmethacrylat, Maleinsäureanhydrid und/oder N-substituiertem-Maleinimid.

Besonders bevorzugte Gewichtsverhältnisse im thermoplastischen Copolymerisat sind 60 bis 95 Gew.-% der Styrolmonomeren und 40 bis 5 Gew.-% der weiteren Vinylmonomeren.

Besonders bevorzugte Copolymerisate sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate sind bekannt und lassen sich durch radikalische Polymerisation, insbesondere durch Emulsions-, Suspensions-, Lösungsoder Massepolymerisation herstellen. Die Copolymerisate besitzen vorzugsweise Molekulargewichte $\overline{M}_w$ (Gewichtsmittel, ermittelt durch Lichtstreuung oder Sedimentation) zwischen 15 000 und 200 000 g/mol.

Besonders bevorzugte Copolymerisate sind auch statistisch aufgebaute Copolymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kemsubstituierte Styrole, wie p-Methylstyrol, 2,4-Dimethylstyrol und andere substituierte Styrole, wie α-Methylstyrol, enthalten.

Die Molekulargewichte (Zahlenmittel $\overline{M}_n$) der Styrol-Maleinsäureanhydrid-Copolymeren können über einen weiten Bereich variieren. Bevorzugt ist der Bereich von 60 000 bis 200 000 g/mol. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Geeignet als thermoplastische Kunststoffe sind auch Pfropf-Copolymerisate. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Pfropfpolymerisate sind partiell vernetzt und besitzen Gelgehalte von über 20 Gew.-%, vorzugsweise über 40 Gew.-%, insbesondere über 60 Gew.-%.

Bevorzugt zum Einsatz kommende Pfropf-Copolymerisate sind z.B. Copolymerisate aus Styrol und/oder Acrylnitril und/oder (Meth)-Acrylsäurealkylestern gepfropft auf Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Die Pfropf-Copolymerisate können nach bekannten Verfahren wie Masse-, Suspension, Emulsions- oder Masse-Suspensionsverfahren hergestellt werden.

Als thermoplastische Polyamide können Polyamid 66 (Polyhexamethylenadipinamid) oder Polyamide von cyclischen Lactamen mit 6 bis 12 C-Atomen, bevorzugt von Laurinlactam und besonders bevorzugt ε-Caprolactam = Polyamid 6 (Polycaprolactam) oder Copolyamide mit Hauptbestandteilen 6 oder 66 oder Abmischungen mit Hauptbestandteil der genannten Polyamide verwendet werden. Bevorzugt ist durch aktivierte anionische Polymerisation hergestelltes Polyamid 6 oder durch aktivierte anionische Polymerisation hergestelltes Copolyamid mit Hauptbestandteil Polycaprolactam.

Die Reservoirschicht enthält ein frei bewegliches Phobierungsmittel. Der Anteil des Phobierungsmittels an der Reservoirschicht beträgt insbesondere von 0,001 Vol.-% bis 99 Vol.-%, bevorzugt von 0,005 Vol.-% und 50 Vol.-%, besonders bevorzugt von 0,01 Vol.-% und 10 Vol.-% und ganz besonders bevorzugt von 0,1 Vol.-% und 5 Vol.-%.

Als hydrophobes und/oder oleophobes Phobierungsmittel sind grenzflächenaktive Verbindungen mit beliebiger Molmasse anzusehen. Bei diesen Verbindungen handelt es sich bevorzugt um kationische, anionische, amphotere oder nicht-ionische grenzflächenaktive Verbindungen, wie sie z.B. im Verzeichnis "Surfactants Europa, A Dictionary of Surface Active Agents available in Europe, Edited by Gordon L. Hollis, Royal Society of Chemistry, Cambridge, 1995 aufgeführt werden.

Als anionische Phobierungshilfsmittel sind beispielsweise zu nennen: Alkylsulfate, Ethersulfate, Ethercarboxylate, Phosphatester, Sulfosucinate, Sulfosuccinatamide, Paraffinsulfonate, Olefinsulfonate, Sarcosinate, Isothionate, Taurate und Lingninische Verbindungen.

Als kationische Phobierungshilfsmittel sind beispielsweise quarternäre Alkylammoniumverbindungen und Imidazole zu nennen

Amphotere Phobierungshilfsmittel sind zum Beispiel Betaine, Glycinate, Propionate und Imidazole.

Nichtionische Phobierungshilfsmittel sind beispielsweise: Alkoxylate, Alkyloamide, Ester, Aminoxide und Alkypolyglykoside. Weiterhin kommen in Frage: Umsetzungsprodukte von Alkylenoxiden mit alkylierbaren Verbindungen, wie z. B. Fettalkoholen, Fettaminen, Fettsäuren, Phenolen, Alkylphenolen, Arylalkylphenolen, wie Styrol-Phenol-Kondensate, Carbonsäureamiden und Harzsäuren.

Besonders bevorzugt sind Phobierungshilfsmittel bei denen 1-100 %, besonders bevorzugt 60-95 % der Wasserstoffatome durch Fluoratome substituiert sind. Beispielhaft seien perfluoriertes Alkylsulfat, perfluorierte Alkylsulfonate, perfluorierte Alkylphosphonate, perfluorierte Alkylphosphinate und perfluorierte Carbonsäuren genannt.

Bevorzugt werden als polymere Phobierungshilfsmittel zur hydrophoben Beschichtung oder als polymeres hydrophobes Material für die Oberfläche Verbindungen mit einer Molmasse $M_w$>500 bis 1.000.000, bevorzugt 1.000 bis 500.000 und besonders bevorzugt 1500 bis 20.000 eingesetzt. Diese polymeren Phobierungshilfsmittel können nichtionische, anionische, kationische oder amphotere Verbindungen sein.

Ferner können diese polymeren Phobierungshilfsmittel Homo- und Copolymerisate, Pfropf- und Pfropfcopolymerisate sowie statistische Blockpolymere sein.

Besonders bevorzugte polymere Phobierungshilfsmittel sind solche vom Typ AB-, BAB- und ABC-Blockpolymere. In den AB- oder BAB-Blockpolymeren ist das A-Segment ein hydrophiles Homopolymer oder Copolymer, und der B-Block ein hydrophobes Homopolymer oder Copolymer oder ein Salz davon.

Besonders bevorzugt sind auch anionische, polymere Phobierungshilfsmittel, insbesondere Kondensationsprodukte von aromatischen Sulfonsäuren mit Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit.

Weiterhin bevorzugt sind Kondensationsprodukte, die durch Umsetzung von Naphtholen mit Alkanolen, Anlagerungen von Alkylenoxid und mindestens teilweiser Überführung der terminalen Hydroxygruppen in Sulfogruppen oder Halbester der Maleinsäure und Phthalsäure oder Bernsteinsäure erhältlich sind.

In einer anderen bevorzugten Ausführung des erfindungsgemäßen Verfahrens ist das Phobierungshilfsmittel aus der Gruppe der Sulfobernsteinsäureester sowie Alkylbenzolsulfonate. Weiterhin bevorzugt sind sulfatierte, alkoxylierte Fettsäuren oder deren Salze. Als alkoxylierte Fettsäurealkohole werden insbesondere solche mit 5 bis 120, mit 6 bis 60, ganz besonders bevorzugt mit 7-30 Ethylenoxid versehene $C_6$-$C_{22}$-Fettsäurealkohole, die gesättigt oder ungesättigt sind, insbesondere Stearylalkohol, verstanden. Die sulfatierten alkokylierten Fettsäurealkohole liegen vorzugsweise als Salz, insbesondere als Alkali- oder Aminsalze, vorzugsweise als Diethylaminsalz vor.

Die Abdeckschicht besteht insbesondere aus einem Metalloxid, Metallcarbid, Metallnitrid, Metallsulfid, Metallfluorid oder eines Verbundes dieser Materialien.

Besonders bevorzugt ist das Metall für Metallverbindung der Abdeckschicht aus der Reihe Beryllium, Magnesium, Scandium, Titan, Vanadium, Chrom, Mangan, Eisen, Kobalt, Nickel, Kupfer, Zink, Gallium, Yttrium, Zirkon, Niob, Molybdän, Technetium, Ruthenium, Rhenium, Palladium, Silber, Cadmium, Indium, Zinn, Lanthan, Cer, Praseodym, Neodym, Samarium, Europium, Gadolinium, Terbium, Dysprosium, Holmium, Erbium, Thulium, Ytterbium, Lutetium, Hafnium, Tantal, Wolfram, Rhenium, Osmium, Iridium, Platin, Gold, Thallium, Blei, Wismut, insbesondere Titan, Aluminium, Magnesium, Nickel oder einer Legierung der genannten Metalle ausgewählt.

Besonders bevorzugt wird die Abdeckschicht durch Verdampfen oder Zerstäuben der genannten Schichtmaterialien und Abscheiden auf der Reservoirschicht erzeugt.

Ebenfalls besonders bevorzugt weist die Oberfläche der Abdeckschicht eine Oberflächentopographie auf, wie sie in der internationalen Patentanmeldung mit dem Aktenzeichen PCT/99/10322 beschrieben ist. Die Oberflächentopographie ist dabei so aufgebaut, dass der Wert des Integrals einer Funktion S

$$S(\log f) = a(f) \cdot f ,$$

die einen Zusammenhang zwischen den Ortsfrequenzen f der einzelnen Fourierkomponenten und deren Amplituden a(f) gibt, zwischen den Integrationsgrenzen $\log (f_1 / \mu m^{-1}) = -3$ und $\log (f_2 / \mu m^{-1}) = 3$, mindestens 0,3 beträgt.

In diesem Fall ist der Randwinkel von Wasser auf der Oberfläche deutlich höher, als der einer gleich aufgebauten aber unstrukturierten, ebenen Oberfläche.

Für die erfindungsgemäßen Oberflächen gibt es eine Vielzahl von technischen Verwendungsmöglichkeiten. Gegenstand der Erfindung sind deshalb auch die folgenden Verwendungen der erfindungsgemäßen phobierte Oberflächen:

Im Fall von transparenten Materialien können die phobierten Oberflächen als Scheibe oder als Deckschicht von transparenten Scheiben, insbesondere Glas- oder Kunststoffscheiben, insbesondere für Solarzellen, Fahrzeuge, Flugzeuge oder Häuser venvendet werden.

Eine weitere Verwendung sind Fassadenelemente von Gebäuden, um sie vor Nässe zu schützen.

Im folgenden wird die Erfindung anhand von Figuren und Beispielen erläutert.

Es zeigen:

Figur 1 den Querschnitt der Oberfläche

Figur 1a einen vergrößerten Ausschnitt der Oberfläche nach Figur 1

<u>**Beispiel**</u>

**1. Herstellung der Reservoirschicht**

Man tropft die Mischung aus

30 g o-Trifluormethylstyrol
70 g Zonyl-TA-N (Verbindung der Formel: $C_9F_{19}CH_2CH_2O\text{-}CO\text{-}C(CH_3)\text{=}CH_2$)
1 g Azobisisobutyronitril und
100 g Methylisobutylketon

über 2 h bei 90°C in einen Kolben und lässt die Mischung 16 h nachrühren. Dann wird die Mischung 1 h auf 120°C erhitzt. Anschließend wird 1g Zonylalkohol [$C_9F_{19}CH_2CH_2OH$] diffundierendes Phobierungsmittel zu der Mischung hinzugegeben.

Als Substrat 1 dient eine Glasscheibe der Dicke 4 mm. Mit Hilfe eines Filmziehrahmens wird eine Fläche von $50 \times 50 mm^2$ der Glasscheibe mit einer Nassfilmdicke von 200µm beschichtet und 24 h bei 80°C getrocknet.

**2. Herstellung der Abdeckschicht 3**

Die Reservoirschicht 2 wurde durch Elektronenstrahlverdampfung bei einer Substrattemperatur von 353K, einer Rate von 0,35 nm/s bei einem Druck von $1 \times 10^{-4}$ mbar mit einer 1 µm dicken $ZrO_2$-Schicht bedampft.

**3. Herstellung der Poren 4**

Die Herstellung der Poren 4 in der Abdeckschicht 3 erfolgt durch Laserablation mit einem gepulsten UV-Laser bei 193 nm mit einer Pulsenergie von 4 $J/cm^2$ Puls. Verwendet wurde ein ArF Eximer Laser, Typ Lambda 1000 der Firma Lambda Physik. Der Strahlquerschnitt von ca. 20µm Durchmesser wurde durch eine Lochblende erzeugt.

Mit dieser Vorrichtung wird bei einer Wiederholfrequenz von 20Hz mit 10 Pulsen die in der Figur 1a dargestellte

Bohrung 4 in der Abdeckschicht 3 vom Durchmesser 20µm hergestellt. Insgesamt wurden 4×4 Poren 4 in einem Abstand benachbarter Poren 4 von 10mm in die Abdeckschicht 3 eingebracht.

Anschließend wird die so hergestellte Probe für 24 Stunden bei 100°C ausgeheizt.

Der Wasserrandwinkel der erhaltenen Oberfläche beträgt nach der Herstellung 132°. Eine Analyse der Außenschicht 5 der Oberfläche wurde mit Hilfe der Röntgenphotoelektronen Spektroskopie (XPS) mit polychromatischer MgKα Anregung unter 0° Elektronenaustrittswinkel auf einer Fläche vom Durchmesser von ca. 150 µm durchgeführt. Die Analyse der Oberfläche ergab einen relativen Fluoranteil von 52 Atom%. Daneben wurde auch noch ein Anteil von 1.0 Atom% Zr, 41 Atom% C und 5 Atom% O nachgewiesen. Bei den verwendeten Analysebedingungen zeigt dieser Zr-Anteil eine Schichtdicke des hydrophoben Films in der Größenordung von 5nm an (vgl. zu dieser Analysemethode: D. Briggs, M.P. Seah, Practical Surface Analysis, Vol. 1, Wiley, Chichester, 1990).

Zum Test der Dauerhaftigkeit der Beschichtung wird die Außenschicht 5 durch Ionenbeschuss mit Ar-Ionen der Energie 500eV auf einer Fläche von 10×10mm² völlig entfernt. Nach dem Ionenbeschuss war kein Fluor mehr auf der beschossenen Fläche nachweisbar. Die XPS Analyse zeigt eine reine $ZrO_2$ Schicht. Der Wasserrandwinkel betrug nach dem Beschuss nur noch 30°. Im Verlauf eines Tages änderte sich die Oberflächenzusammensetzung jedoch wieder auf die Werte vor dem Ionenbeschuss und der Wasserrandwinkel erhöhte sich auf 130°. Die Außenschicht 5 ist also selbsterneuernd.

Der in der Reservoirschicht 2 vorhandene Anteil an gelöstem Phobierungsmittel Zonylakohol $C_9F_{19}$-$CH_2$-$CH_2$-OH von 1% reicht bei der Schichtdicke der Außenschicht 5 von ca. 5nm für einen ca. 200-maligen vollständigen Ersatz der hydrophoben Außenschicht 5. Bei einer Verwitterungszeit unter Normalbedingungen von ca. 1 Monat beträgt die Lebensdauer der Außenschicht und die Stabilität des Randwinkels somit etwa voraussichtlich 17 Jahre.

## Patentansprüche

1. Langzeitstabile hydrophobe oder oleophobe Oberfläche aufgebaut wenigstens aus einem Substrat (1) mit einer darauf angeordneten, ein Phobierungsmittel enthaltenden Reservoirschicht (2), einer darüber angeordneten mit Poren (4) versehenen oder für das Phobierungsmittel durchlässigen Abdeckschicht (3) und einer Außenschicht (5), die durch das Phobierungsmittel gebildet wird, wobei eine hydrophobe Oberfläche einen Randwinkel bezogen auf Wasser von größer als 90° und eine oleophobe Oberfläche einen Randwinkel bezogen auf n-Dekan größer als 90° zeigt.

2. Oberfläche nach Anspruch 1, **dadurch gekennzeichnet, dass** die äußere Oberfläche der Abdeckschicht (3) eine Oberflächentopographie aufweist die so gestaltet ist, dass der Wert des Integrals einer Funktion S

$$S(\log f) = a(f) \cdot f ,$$

die einen Zusammenhang zwischen den Ortsfrequenzen f der einzelnen Fourierkomponenten und deren Amplituden a(f) gibt, zwischen den Integrationsgrenzen $\log (f_1 / \mu m^{-1}) = -3$ und $\log (f_2 / \mu m^{-1}) = 3$, mindestens 0,3 beträgt.

3. Oberfläche nach Anspruch 1 oder 2, **dadurch gekennzeichnet, dass** die Reservoirschicht (2) eine Schichtdicke im Bereich von 0,1 µm bis 10000 µm, bevorzugt im Bereich von 1 µm bis 2000 µm, besonders bevorzugt im Bereich von 10µm bis 1000µm und ganz besonders bevorzugt im Bereich 50µm bis 500µm aufweist.

4. Oberfläche nach einem der Ansprüche 1 bis 3, **dadurch gekennzeichnet, dass** die Abdeckschicht (3) eine Schichtdicke im Bereich von 0,01 µm bis 100 µm, bevorzugt im Bereich von 0,02 µm bis 50 µm, besonders bevorzugt im Bereich von 0,05 µm bis 20 µm und ganz besonders bevorzugt im Bereich 0,1 µm bis 10 µm aufweist.

5. Oberfläche nach einem der Ansprüche 1 bis 4, **dadurch gekennzeichnet, dass** die Poren (4) im Querschnitt entlang ihrer Längsachse eine zylindrische oder konische Form aufweisen.

6. Oberfläche nach einem der Ansprüche 1 bis 5, **dadurch gekennzeichnet, dass** der Öffnungsquerschnitt der Poren (4) an der Grenzfläche zur Reservoirschicht (2) und unabhängig hiervon gleich oder verschieden an der Grenzfläche zur Außenschicht (5) von $10^{-5}$ µm² bis $10^6$ µm², bevorzugt von $1\times10^{-4}$ µm² bis $4\times10^4$ µm², besonders bevorzugt von $1\times10^{-2}$ µm² bis $1\times10^4$ nm² und ganz besonders von $2\times10^{-1}$ µm² bis $2\times10^3$ µm² beträgt.

7. Oberfläche nach einem der Ansprüche 1 bis 6, **dadurch gekennzeichnet, dass** die Anzahl der Poren (4) pro

Fläche von 2 $mm^{-2}$ bis $10^{-4}$ $mm^{-2}$, bevorzugt von 1 $mm^{-2}$ bis $10^{-3}$ $mm^{-2}$, desonders bevorzugt von 0,5 $mm^{-2}$ bis $10^{-2}$ $mm^{-2}$ beträgt.

**8.** Oberfläche nach einem der Ansprüche 1 bis 7, **dadurch gekennzeichnet, dass** die Poren (4) vorzugsweise durch Ablation mit Lasern, besorders bevorzugt durch Ultraviolett-Laser, ganz besondrs bevorzugt durch Ultraviolett-Laser der Wellenlängen 308 nm, 266 nm, 248 nm, 213 nm, 193 nm oder 157 nm hergestellt sind.

**9.** Oberfläche nach einem der Ansprüche 1 bis 8, **dadurch gekennzeichnet, dass** das Substrat (1) aus einem transparenten Material, insbesondere transparentem Glas, Kunststoff oder Keramik besteht.

**10.** Oberfläche nach einem der Ansprüche 1 bis 9, **dadurch gekennzeichnet, dass** die Reservoirschicht (2) eine offen-poröse Schicht aus Metall oder eine offenporöse Schicht eines keramischen Materials ist oder aus einem duroplastischen oder thermoplastischen Kunststoff, bevorzugt aus einem transparenten Material, insbesondere aus transparentem Glas, Kunststoff oder Keramik besteht.

**11.** Oberfläche nach einem der Ansprüche 1 bis 10, **dadurch gekennzeichnet, dass** der Anteil des Phobierungsmittels an der Reservoirschicht (2) von 0,001 Vol.-% bis 99 Vol.-%, bevorzugt von 0,005 Vol.-% und 50 Vol.-%, besonders bevorzugt von 0,01 Vol.-% und 10 Vol.-% und ganz besonders bevorzugt von 0,1 Vol.-% und 5 Vol.-% beträgt.

**12.** Oberfläche nach einem der Ansprüche 1 bis 10, **dadurch gekennzeichnet, dass** die Abdeckschicht (3) aus einem Metalloxid, Metallcarbid, Metallnitrid, Metallsulfid, Metallfluorid oder eines Verbundes dieser Materialien besteht.

**13.** Verwendung der Oberfläche nach einem der Ansprüche 1 bis 12 für Fassadenelemente von Gebäuden.

**14.** Verwendung der Oberfläche nach einem der Ansprüche 1 bis 12 mit einem Schichtenaufbau aus transparenten Materialien als Scheibe oder als Deckschicht von transparenten Scheiben, insbesondere Glas- oder Kunststoffscheiben, besonders bevorzugt für Solarzellen, Fahrzeuge, Flugzeuge oder Häuser.

**15.** Verfahren zur Herstellung einer langzeitstabilen, hydrophoben oder oleophoben Oberfläche, **dadurch gekennzeichnet, daß** auf ein Substrat (1) eine Reservoirschicht (2), die ein Phobierungsmittel enthält, aufgetragen wird und anschließend über die Reservoirschicht (2) eine Abdeckschicht (3), die mit Poren (4) versehen ist oder die für das Phobierungsmittel durchlässig ist, angeordnet wird und auf der Abdeckschicht eine Außenschicht (5) durch das Phobierungsmittel gebildet wird.

**16.** Verfahren zur ständigen Erneuerung einer langzeitstabilen hydrophoben oder oleophoben Oberfläche, die eine Reservoirschicht (2), die ein Phobierungsmittel enthält, eine Abdeckschicht (3) und eine Außenschicht (5) aus Phobierungsmittel aufweist, **dadurch gekennzeichnet, daß** aus der Reservoirschicht ständig neues Phobierungsmittel für die Außenschicht nachgeliefert wird, wodurch deren Abbau kompensiert wird.

## Claims

**1.** Long-term stable water-repellent or oil-repellent surface made up at least of a substrate (1) with a reservoir coating (2) arranged thereon and containing a repellent agent, a covering coating (3) arranged thereover and having pores (4) or being permeable to the repellent agent, and an outer coating (5) which is made up of the repellent agent, in which context a water-repellent surface exhibits a boundary angle in relation to water of greater than 90° and an oil-repellent surface exhibits a boundary angle in relation to n-decane of greater than 90°.

**2.** Surface as claimed in claim 1, **characterised in that** the outer surface of covering coating (3) exhibits a surface topography which is configured such that the value of the integral of a function S

$$S(\log f) = a(f) \cdot f$$

which states a relationship between local frequencies f of the individual Fourier components and their amplitudes a(f), between integration limits $\log(f_1/\mu m^{-1}) = -3$ and $\log(f_2/\mu m^{-1}) = 3$, is at least 0.3.

**3.** Surface as claimed in claim 1 or 2, **characterised in that** the reservoir coating (2) exhibits a coating thickness in the range of 0.1 µm to 10,000µm, preferably in the range of 1 µm to 2,000 µm, particularly preferably in the range of 10 µm to 1,000 µm and quite especially preferably in the range of 50 µm to 500 µm.

**4.** Surface as claimed in any one of claims 1 to 3, **characterised in that** the covering coating (3) exhibits a coating thickness in the range of 0.01 µm to 100 µm, preferably in the range of 0.02 µm to 50 µm, particularly preferably in the range of 0.05 µm to 20 µm and quite especially preferably in the range of 0.1 µm to 10 µm.

**5.** Surface as claimed in any one of claims 1 to 4, **characterised in that** the pores (4) exhibit a cylindrical or conical form in transverse section along their longitudinal axis.

**6.** Surface as claimed in any one of claims 1 to 5, **characterised in that** the aperture section of the pores (4) at the boundary surface to the reservoir coating (2), which may independently be the same or different at the boundary surface in relation to the outer coating, is from $10^{-5}$ $\mu m^2$ up to $10^6$ $\mu m^2$, preferably of $4x10^{-4}$ $\mu m^2$ to $4x10^4$ $\mu m^2$, particularly preferably from $1x10^{-2}$ $\mu m^2$ up to $1x10^4$ $nm^2$ and quite exceptionally advantageously from $2x10^4$ $\mu m^2$ to $2x10^3$ $\mu m^2$.

**7.** Surface as claimed in any one of claims 1 to 6, **characterised in that** the quantity of pores (4) per unit surface area is from 2 $mm^{-2}$ to $10^{-4}$ $mm^{-2}$, and preferably 1 $mm^{-2}$ to $10^{-3}$ $mm^{-2}$, with particular preference for 0.5 $mm^{-2}$ to $10^{-2}$ $mm^{-2}$.

**8.** Surface as claimed in any one of claims 1 to 7, **characterised in that** the pores (4) are preferably produced by ablation with lasers, particularly preferably by ultra violet laser, and with especially particular preference for ultra violet laser of wavelengths 308 nm, 266 nm, 248 nm, 213 nm, 193 nm or 157 nm.

**9.** Surface as claimed in any one of claims 1 to 8, **characterised in that** the substrate (1) consists of a transparent material, particularly transparent glass, plastic or ceramics.

**10.** Surface as claimed in any one of claims 1 to 9, **characterised in that** the reservoir coating (2) is an open/porous coating of metal or an open/porous coating of a ceramic material or consists of a duroplastic or thermoplastic material, preferably a transparent material, and preferably a transparent glass, plastic or ceramic.

**11.** Surface as claimed in any one of claims 1 to 10, **characterised in that** the proportion of the repellent agent in relation to reservoir coating (2) is of 0.001% volume to 99% volume, preferably of 0.005% volume and 50% volume, particularly preferably of 0.01% volume and 10% volume and quite especially preferably of 0.1% volume and 5% volume.

**12.** Surface as claimed in any one of claims 1 to 10, **characterised in that** the covering coating (3) consists of a metal oxide, metal carbide, metal nitride, metal sulphide, metal fluoride or a combination of these materials.

**13.** Use of a surface as claimed in any one of claims 1 to 12 for frontage components of buildings.

**14.** Use of a surface as claimed in any one of claims 1 to 12 with a coating construction of transparent materials as a panel or as a covering coating of transparent panels, particularly glass or plastic panels, being particularly preferred for solar cells, vehicles, aircraft or buildings.

**15.** Process for production of a long-term stable, water-repellent or oil-repellent surface, **characterised in that** a reservoir coating (2) which contains a repellent agent is applied to a substrate (1), after which there is arranged over reservoir coating (2) a covering coating (3) which is provided with pores (4) or which is permeable to the repellent agent, and on the covering coating there is formed an outer coating (5) by virtue of the repellent agent.

**16.** Process for continuous renewal of a long-term stable, water-repellent or oil-repellent surface which exhibits a reservoir coating (2) which contains a repellent agent, a covering coating (3) and an outer coating (5) consisting of repellent agent, **characterised in that** new repellent agent is continuously supplied from the reservoir coating for the outer coating, which compensates for its breakdown.

## Revendications

1. Surface hydrophobe ou oléophobe, stable à long terme, constituée d'au moins un substrat (1) avec, disposée sur ce dernier, une couche réservoir (2), contenant un agent d'imperméabilisation, avec, disposée par dessus, une couche de recouvrement (3), pourvue de pores (4) ou perméable à l'agent d'imperméabilisation et avec une couche externe (5), qui est formée par l'agent d'imperméabilisation, une surface hydrophobe manifestant un angle mouillant par rapport à l'eau supérieur à 90° et une surface oléophobe manifestant un angle mouillant par rapport au n-décane supérieur à 90°.

2. Surface selon la revendication 1, **caractérisée en ce que** la surface externe de la couche de recouvrement (3) présente une topographie superficielle qui est réalisée de telle sorte que la valeur de l'intégrale d'une fonction S $S(\log^{f}) = a(f) . f$ qui donne une relation entre les fréquences locales f des composants de Fourier individuels et leur amplitude a(f), entre les limites d'intégration $\log (f_1/\mu m^{-1}) = -3$ et $\log (f_2/ \mu m^{-1}) = 3$, est d'au moins 0,3.

3. Surface selon la revendication 1 ou la revendication 2, **caractérisée en ce que** la couche réservoir (2) présente une épaisseur de couche dans le domaine de 0,1 µm à 10000 µm, de préférence, dans le domaine de 1 pm à 2000 µm, en particulier, de préférence, dans le domaine de 10 µm à 1000 µm et tout particulièrement, de préférence, dans le domaine de 50 µm à 500 µm.

4. Surface selon l'une quelconque des revendications 1 à 3, **caractérisée en ce que** la couche de recouvrement (3) présente une épaisseur de couche dans le domaine de 0,01 µm à 100 µm, de préférence, dans le domaine de 0,02 µm à 50 µm, en particulier, de préférence, dans le domaine de 0,05 µm à 20 µm et tout particulièrement de préférence, dans le domaine de 0,1 µm à 10 µm.

5. Surface selon l'une quelconque des revendications 1 à 4, **caractérisée en ce que** les pores (4) présentent une forme cylindrique ou une forme conique en section transversale le long de leur axe longitudinal.

6. Surface selon l'une quelconque des revendications 1 à 5, **caractérisée en ce que** la section transversale d'ouverture des pores (4) à la surface limitrophe vers la couche réservoir (2) et, indépendamment de cette dernière, la section transversale de ces derniers, égale ou différente, à la surface limitrophe vers la couche externe (5) sont de $10^{-5}$ $\mu m^2$ à $10^6$ $\mu m^2$, de préférence, de $4 \times 10^{-4}$ $\mu m^2$ à $4 \times 10^4$ $\mu m^2$, en particulier, de préférence, de $1 \times 10^{-2}$ $\mu m^2$ à $1 \times 10^4$ $\mu m^2$ et tout particulièrement de $2 \times 10^{-1}$ $\mu m^2$ à $2 \times 10^3$ $\mu m^2$.

7. Surface selon l'une quelconque des revendications 1 à 6, **caractérisée en ce que** le nombre de pores (4) par surface est de 2 $mm^{-2}$ à $10^{-4}$ $mm^{-2}$, de préférence, de 1 $mm^{-2}$ à $10^{-3}$ $mm^{-2}$, en particulier, de préférence, de 0,5 $mm^{-2}$ à $10^{-2}$ $mm^{-2}$.

8. Surface selon l'une quelconque des revendications 1 à 7, **caractérisée en ce que** les pores (4) sont réalisés par ablation à l'aide de lasers, en particulier, de préférence, à l'aide de lasers ultraviolets, tout particulièrement, de préférence, à l'aide de lasers ultraviolets des longueurs d'onde 308 nm, 266 nm, 248 nm, 213 nm, 193 nm ou 157 nm.

9. Surface selon l'une quelconque des revendications 1 à 8, **caractérisée en ce que** le substrat (1) se compose d'un matériau transparent, en particulier de verre, de matière synthétique ou de céramique transparent(e).

10. Surface selon l'une quelconque des revendications 1 à 9, **caractérisée en ce que** la couche réservoir (2) est une couche poreuse ouverte en métal ou une couche poreuse ouverte d'un matériau céramique ou se compose d'une matière synthétique duroplaste ou thermoplaste, de préférence, d'un matériau transparent, en particulier d'un verre transparent, d'une matière synthétique ou céramique transparente.

11. Surface selon l'une quelconque des revendications 1 à 10, **caractérisée en ce que** la proportion de l'agent d'imperméabilisation sur la couche réservoir (2) est de 0,001% en volume à 99% en volume, de préférence, de 0,005% en volume à 50% en volume, en particulier, de préférence, de 0,01% en volume à 10% en volume et tout particulièrement, de préférence, de 0,1% en volume à 5% en volume.

12. Surface selon l'une quelconque des revendications 1 à 10, **caractérisée en ce que** la couche de recouvrement (3) se compose d'un oxyde métallique, d'un carbure métallique, d'un nitrure métallique, d'un sulfure métallique, d'un fluorure métallique ou d'un composite de ces matériaux.

**13.** Utilisation de la surface selon l'une quelconque des revendications 1 à 12 pour des éléments de façade de bâtiments.

**14.** Utilisation de la surface selon l'une quelconque des revendications 1 à 12, avec une structure en couches faite de matériaux transparents en tant que disque ou couche de finition de disques transparents, en particulier de disques en verre ou en matière synthétique, en particulier, de préférence, pour des cellules solaires, des véhicules, des avions ou des bâtiments.

**15.** Procédé en vue de la fabrication d'une surface hydrophobe ou oléophobe stable à long terme, **caractérisé en ce que** sur un substrat (1) on applique une couche réservoir (2), qui contient un agent d'imperméabilisation, et **en ce que** l'on dispose ensuite, sur la couche réservoir (2), une couche de recouvrement (3), qui est pourvue de pores (4) ou qui est perméable à l'agent d'imperméabilisation et **en ce que** l'on forme, sur la couche de recouvrement, une couche externe (5) grâce à l'agent d'imperméabilisation.

**16.** Procédé en vue du renouvellement permanent d'une surface hydrophobe ou oléophobe stable à long terme, qui présente une couche réservoir (2), qui contient un agent d'imperméabilisation, une couche de recouvrement (3) et une couche externe (5) faite d'un agent d'imperméabilisation, **caractérisé en ce qu'**à partir de la couche réservoir on alimente en permanence de l'agent d'imperméabilisation frais pour la couche externe, en compensant ainsi sa dégradation.

Fig.1 Fig.1a